# EUROPEAN PATENT SPECIFICATION

(11) **EP 0 312 320 B1**
(45) Date of publication and mention of the grant of the patent: **23.03.1994**
(21) Application number: 88309524.2
(22) Date of filing: 12.10.1988
(51) Int. Cl.: B67D 5/34, F16K 21/18, F16K 31/18

(54) **Overfill valve construction**
Konstruktion eines Ventils zum Verhindern einer Überfüllung
Construction d'une vanne de trop plein

(30) Priority: 13.10.1987 US 108152
(43) Date of publication of application: 19.04.1989
(60) Divisional application: 93109496.5
(73) Proprietor: DOVER CORPORATION, New York N.Y. 10172 (US)
(72) Inventor: Kesterman, James E., Cincinnati Ohio 45239 (US); McMath, Jack A., Fort Thomas Kentucky 41075 (US)
(74) Representative: Davies, Christopher Robert

(56) References cited:
- FR-A- 2 205 166
- FR-A- 2 270 198
- FR-A- 2 302 472
- US-A- 3 963 041
- US-A- 4 667 711

## Description

This invention relates to a new overfill valve construction for use in a storage tank means having a chamber therein for storing liquid fuel.

It is known to provide an overfill valve construction for use in a storage tank means having a chamber therein for storing liquid fuel and the like and having an inlet riser pipe means extending therefrom, the construction comprising a drop tube means for being inserted through the riser pipe means and have a portion thereof disposed within the storage tank, a valve means in the drop tube means and having a valve seat and a movable valve member for opening and closing the valve seat so as to tend to close the drop tube means between the opposed ends thereof, and float means operatively interconnected to the valve member to cause closing of the valve member when the float means is raised to a certain position relative to the portion by rising liquid in the storage tank means. For example, see the U.S. patent to Draft, No. 4,667,711.

It is also known to provide such an overfill valve construction wherein the valve member has an opening means therethrough for interconnecting the area of the drop tube means on one side of the valve means to the area of the drop tube means on the other side of the valve means even when the valve member is closed against the valve seat. For example, see the aforementioned U.S. patent to Draft, No. 4,667,711.

It is also known to provide such an overfill valve construction wherein the valve member is pivotally mounted to the drop tube means by a first pivot shaft means and the float means is operatively mounted to the drop tube means by a second pivot shaft means. For example, see the aforementioned U.S. patent to Draft, No. 4,667,711.

It is one feature of this invention to provide a new overfill valve construction for use in a storage tank means having a chamber therein for storing liquid fuel and the like and having an inlet riser pipe means extending therefrom, the new overfill valve construction having unique means for containing the float member therein as the drop tube means has a portion thereof inserted through the riser pipe means to be received in the chamber of the storage tank means.

In particular, the prior known drop tube means has an enlarged opening in the sidewall means thereof and into which the float means is disposed so that the drop tube means can be inserted through the riser pipe means, such opening means being adapted to be thereafter closed by sliding an internal annular shield means of the drop tube means in place.

However, in accordance with a first aspect of this invention, the sidewall means of the drop tube means are provided with a depressed area therein and in which the float means is disposed so as to be maintained substantially within the outline of the drop tube means when the drop tube means is inserted through the riser pipe means so that such prior known large opening means in the sidewall means is not now necessary.

Thus, the invention provides an overfill valve construction for use in a storage tank means having a chamber therein for storing liquid fuel and the like and having an inlet riser pipe means extending therefrom, the construction comprising a drop tube means for being inserted through the riser pipe means and have a portion thereof disposed within the storage tank means, a main valve means in the drop tube means and having a main valve seat and a movable main valve member for opening and closing the main valve seat so as to tend to close the drop tube means between the opposed ends thereof, and float means operatively interconnected to the main valve member to cause closing of the main valve member when the float means is raised to a certain position relative to the portion by rising liquid in the chamber of the storage tank means, the portion having an external wall that defines a generally cylindrical tubular section that has a generally circular transverse cross-sectional configuration throughout the length thereof except for a depressed area therein in which the float means can be disposed so as to be maintained substantially within the outline of the configuration when the drop tube means has the portion inserted through the riser pipe means to be received in the chamber of the storage tank means.

It is another feature of this invention to provide a new overfill valve construction for use in a storage tank means wherein the initial shock loading of the upstream flow of liquid on the main valve member thereof is relieved in a unique manner when the main valve member initially closes.

In particular, the prior known overfill valve construction, while having an opening means through the main valve member for interconnecting the area of the drop tube means on one side of the main valve means to the area on the other side of the main valve means so as to permit a reduced flow of fuel to be dispensed through the drop tube means when the main valve member is closed, permits an initial shock loading of the fuel against the main valve member when the same initially closes because the opening means cannot be made sufficiently large to effectively reduce the initial shock loading and still perform its function of providing a reduced continuous flow through the drop tube mans after the main valve member is closed.

However, in accordance with a second aspect of this invention the main valve member is provided with an opening means therethrough of a size which will initially permit sufficient fuel to flow therethrough upon the initial closing of the main valve member so that the shock of the fuel flow bearing against the initially closed main valve member will not be so great and means can be provided for closing such opening means so that other means are provided for permitting a reduced flow rate of fuel to pass through the closed drop tube means.

It is another feature of this invention to provide a new overfill valve construction for use in a storage tank means and wherein unique means are provided for bypassing a reduced flow of fuel around the closed main valve means thereof.

In particular, as previously set forth, the prior known overfill valve construction has an opening means through the main valve member which permits a reduced flow of fuel to flow therethrough when the main valve member is disposed in the closed condition thereof and it was found that such an arrangement resulted in a relatively large shock loading to be imposed upon the main valve member when the same is first disposed in its closed position.

However, in accordance with a third aspect of the invention an opening means can be provided through the main valve member of a sufficient size so as to initially reduce the shock loading thereon when the main valve member is initially closed and that such opening means can be subsequently closed by a valve member carried by the main valve member. In addition, the drop tube means is provided with a poppet valve means for providing a reduced flow of fuel therethrough that bypasses the main valve means and the float means is operatively interconnected to the valve member of the poppet valve means to cause closing of the valve member thereof when the float means is raised to a certain position by rising liquid in the chamber of the storage tank means.

It is another feature of this invention to provide a new overfill valve construction for use in a storage tank means wherein unique means are provided for interconnecting the float means to the main valve member thereof for controlling the operation of the main valve member.

In particular, the prior known overfill valve construction has the interconnection means between the float means and the main valve member so arranged that the float means is subjected to the shock forces that are imposed upon the main valve member as the main valve member is forced closed by the fuel being directed thereagainst.

However, according to a further aspect of this invention unique link means are provided to operatively interconnect the float means to the main valve member so that the main valve member will not transmit shock loading forces that are imposed thereon to the float means.

An embodiment of the invention will now be described, by way of example only, with reference to the drawings, in which:-
FIG. 1 is a fragmentary, cross-sectional view illustrating the new overfill valve construction of this invention having been assembled with an under the ground storage tank means that has a chamber therein for scoring liquid fuel and the like.
FIG. 2 is an enlarged fragmentary cross-sectional view illustrating the method of this invention for inserting the overfill valve construction of this invention through the inlet riser pipe means of the storage tank means of FIG. 1.
FIG. 3 is an enlarged, fragmentary, cross-sectional view illustrating the closure means for closing the inlet end of the riser pipe means of the storage tank means of FIG. 1.
FIG. 4 is an enlarged, fragmentary, cross-sectional view of part of the arrangement illustrated in FIG. 1 and illustrates the various operating positions of the float means of the overfill valve construction of this invention.
FIG. 5 is an enlarged, fragmentary, cross-sectional view of a portion of the structure illustrated in FIG. 4 and illustrates the main valve number in the full open position thereof.
FIG. 6 is an enlarged, fragmentary, cross-sectional view of a portion of the arrangement of FIG. 4 and illustrates the main valve member in its initially closed position.
FIG. 7 is a view similar to FIG. 6 and illustrates the float means of the overfill valve construction of this invention in a position thereof that causes the closing of a poppet valve means of the overfill valve construction, such poppet valve means being shown in FIGS. 8-11.
FIG. 8 is an enlarged, fragmentary, cross-sectional view taken substantially on line 8-8 of FIG. 5.
FIG. 9 is an enlarged, fragmentary, cross-sectional view taken substantially on line 9-9 of FIG. 8 and illustrates a bypass poppet valve means of the overfill valve construction of this invention in its open condition.
FIG. 10 is a view similar to FIG. 9 and illustrates how the poppet valve means performs its bypass function.
FIG. 11 is a view similar to FIG. 9 and illustrates the poppet valve member of the bypass poppet valve means in its closed condition.
FIG. 12 is an enlarged, fragmentary, cross-sectional view taken substantially on line 12-12 of FIG. 8 and illustrates the drive means of the float means in the position thereof that has caused the main valve member of FIG. 6 to be in the closed condition thereof.
FIG. 13 is an exploded perspective view of the various parts of the overfill valve construction of this invention.

While the preferred features of this invention are hereinafter illustrated and described in relation to an overfill valve construction for use in a storage tank means having a compartment therein for storing liquid fuel and the like and having an inlet rise pipe means extending therefrom, it is to be understood that the invention may be used with other apparatus.

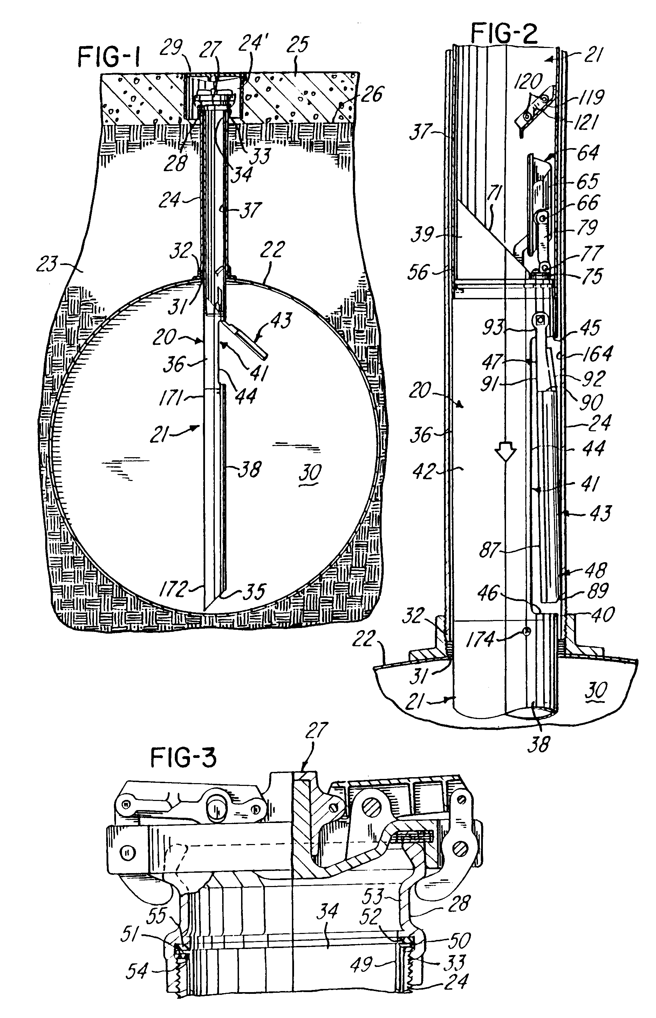

Referring now to FIG. 1, the new overfill valve construction of this invention is generally indicated by the reference numeral 20 and comprises a drop tube means 21 that has been assembled with an under the ground storage tank means 22 that had been buried in the ground 23 and has an inlet riser pipe means 24 extending to a manhole chamber means 24′ that had also been buried in the conventional cement surface layer means 25 disposed on the top 26 of the ground 23 and providing access to a cover plate means 27 at the inlet end means 28 of the riser pipe means 24 through a removable manhole cover 29 in a manner well known in the art.

The storage tank means 22 has a chamber 30 therein for storing liquid fuel and the like and has an upper opening 31 interconnected to a lower end means 32 of the riser pipe means 24 which is substantially cylindrical and has a substantially uniform circular cross-sectional configuration throughout the length thereof, the riser pipe means 24 being secured to the storage tank 22 in alignment with the opening 31 thereof in any suitable manner and having an inlet end 33 thereof adapted to be opened and closed by the removable cover means 27 in the manner illustrated in FIG. 3. Since such structure is well known in the art, a further description thereof is deemed unnecessary except to state that when it is desired to dispense fuel into the chamber 30 of the storage tank means 22, the manhole cover 29 is removed and the riser pipe closure cap means 27 is also removed so that fuel can be disposed in an upper end 34 of the drop tube means 21 that is secured in the upper end 33 of the riser pipe means 24 in a manner hereinafter set forth and be directed into the chamber 30 out through a lower open end 35 of the drop tube means 21.

Such a general arrangement for a drop tube means in connection with a storage tank means and its riser pipe means is well known in the art, such as is set forth in the aforementioned U.S. patent to Draft, No. 4,667,711 whereby this patent is being incorporated into this disclosure by this reference thereto. Therefore, since the use of a drop tube means is well known in the art, only the details of the new overfill valve construction 20 of this invention will now be described.

The drop tube means 21 of this invention comprises three portions or sections 36, 37 and 38, the portion 36 being an intermediate portion and being formed of any suitable material and in any suitable manner, such as by being formed from a casting of aluminum or the like. The portion 36 is substantially tubular or cylindrical and has a substantially uniform circular cross-sectional configuration from one end 39 thereof to another end 40 thereof except for a depressed area 41 that is formed in a sidewall means 42 of the portion 36 so as to contain therein a float means 43 of the overfill valve construction 20 in a manner hereinafter set forth when the drop tube means 21 is being inserted through the inlet riser pipe means 24 in the manner illustrated in FIG. 2, the depressed area 41 defining a substantially flat length 44 of the sidewall means 42 and a pair of opposed facing substantially flat shoulder means 45 and 46 adjacent which opposed ends 47 and 48 of the float means 43 are respectively adapted to be disposed when the float means 43 is moved into the depressed area 41 in the manner illustrated in FIG. 2.

The upper section 37 of the drop tube means 21 comprises a substantially tubular or cylindrical metallic member having an upper end 49 provided with an outwardly turned annular flange 50 which is adapted to be trapped between an upper end surface 51 of the riser pipe means 24 and a shoulder 52 of an upper coupling member 53 threadedly secured to the riser pipe means 24 and defining the end means 28 thereof that is adapted to be opened and closed by the cover means 27. The upper annular flange 50 of the section 37 is adapted to be sealed in the riser pipe means 24 by opposed sealing means 54 and 55 respectively disposed on opposite sides of the flange 50 and adjacent the shoulders 51 and 52 as illustrated in FIG. 3.

A lower end 56 of the tubular portion 37 is adapted to be telescoped over the upper end 39 of the intermediate section or portion 36 and be secured thereto by a plurality of threaded fastening means 57. For example, the fastening means 57 can each comprise a standard countersunk screw respectively having a threaded shank portion 58 received in a threaded bore 59 in the section 36 and have an enlarged head 60 thereof compress an annular portion 61 of the material of the section 37 into a respective oversized countersunk area 62 of the sidewall means 42 of the section 36 so as to provide a relatively large area 63 of the member 36 against which relatively large areas 61 of the section 36 are held by the heads 60 of the fastening members 57 so as to prevent breaking away of the upper section 37 from the setion 36 at the time that tremendous pressure or load is being utilized to close a main valve means 64 of the overfill valve construction 20 in a manner hereinafter set forth.

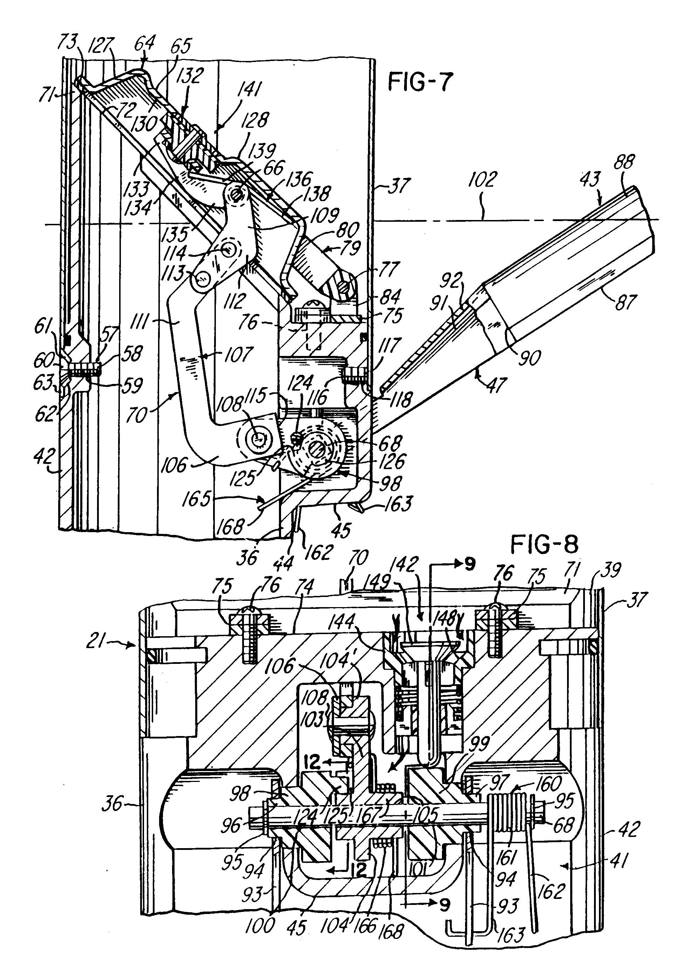

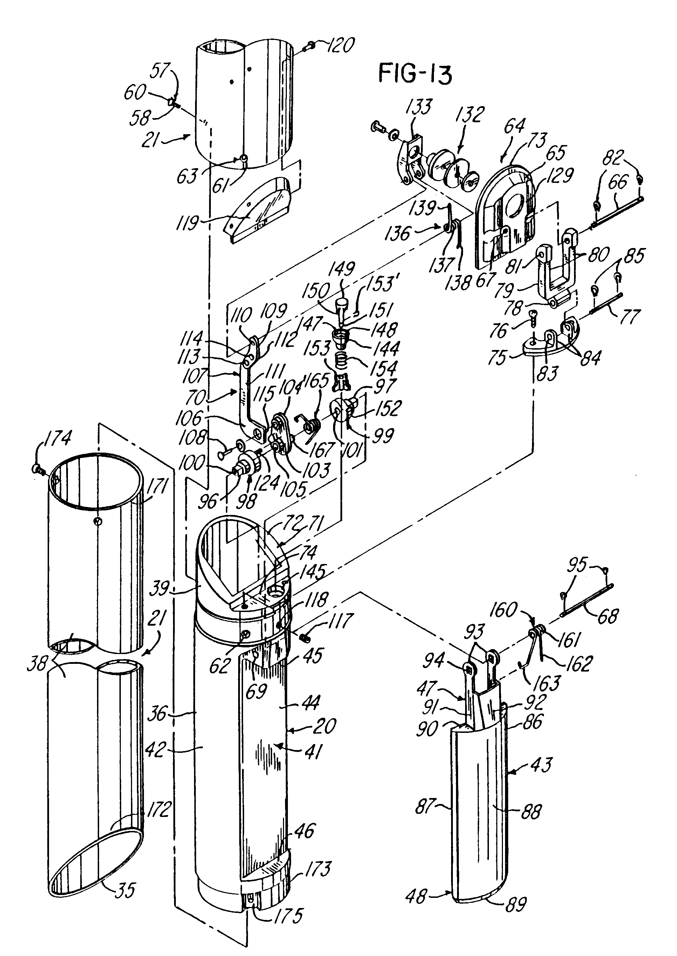

The main valve means 64 comprises a main valve member 65 that is pivotally mounted to a shaft means 66 that passes through suitable opening means 67, FIG. 13, of the valve member 65, the shaft means 66 being effectively interconnected to another shaft means 68 generally carried by the casting 36 and being disposed in suitable opening means 69 thereof in a manner hereinafter set forth by unique link means 70 in a manner hereinafter set forth. The main valve means 64 includes a main valve seat means 71 that is substantially annular and is offset by the shoulder means 45 while being disposed at an angle relative to the longitudinal axis of the drop tube means 21, such as 45° as illustrated, the valve seat 71 comprising an annular flat surface 72 against which an annular sealing means 73 molded on the poppet valve member 65 is adapted to seal against in the closed manner illustrated in FIG. 6.

The main valve seat 71 is offset by an upper flat section or surface 74 of the shoulder means 45 of the section 36 and on which a bracket means 75 is fastened by suitable fastening means 76. The bracket means 75 carries another shaft means 77 which passes through a suitable opening means 78 in a yoke member 79 that has a pair of legs 80 thereof receiving the shaft 66 through suitable openings 81 thereof and having the opposed ends of the shaft 66 fastened thereto by conventional C-shaped retaining means 82 so as to pivotally interconnect the valve member 65 also to the shaft 77 which has its opposed ends passing out through suitable openings 83 formed in spaced apart ears 84 of the bracket means 75 and being secured thereto by conventional C-shaped retaining members 85 as illustrated.

The float means 43 comprises an elongated molded body 86 of any suitable float material and having a flat rear side 87 and an arcuate front side 88 with opposed ends 89 and 90, a metallic part 91 being molded with the body part 86 and extending outwardly therefrom to define the end 47 thereof with an angled outer wall 92 tapering toward the casting or portion 36 and having a pair of spaced apart ears 93 receiving the opposed ends of the shaft 68 through suitable openings 94 thereof so that the shaft means 68 can be fastened thereto by conventional C-shaped fastening members 95. The openings 94 in the ears 93 of the float 43 are rectangular in configuration and respectively receive rectangular extensions 96 and 97 of a driver member 98 and a cam member 99 therethrough, the driver member 98 being rotatably mounted on the shaft 68 which passes through a suitable central opening 100 therein and the cam member 99 also being rotatably mounted on the shaft 68 which passes through a suitable opening 101 passing centrally through the cam member 99.

In this manner, the float member or means 43 is pivotally mounted to the section 36 by the shaft means 68 and is formed of any suitable material which will float and rise with the liquid level in the chamber 30 of the storage tank means 22 as that liquid level engages against the float means 43 such as is provided by the liquid level line 102 in FIG. 7.

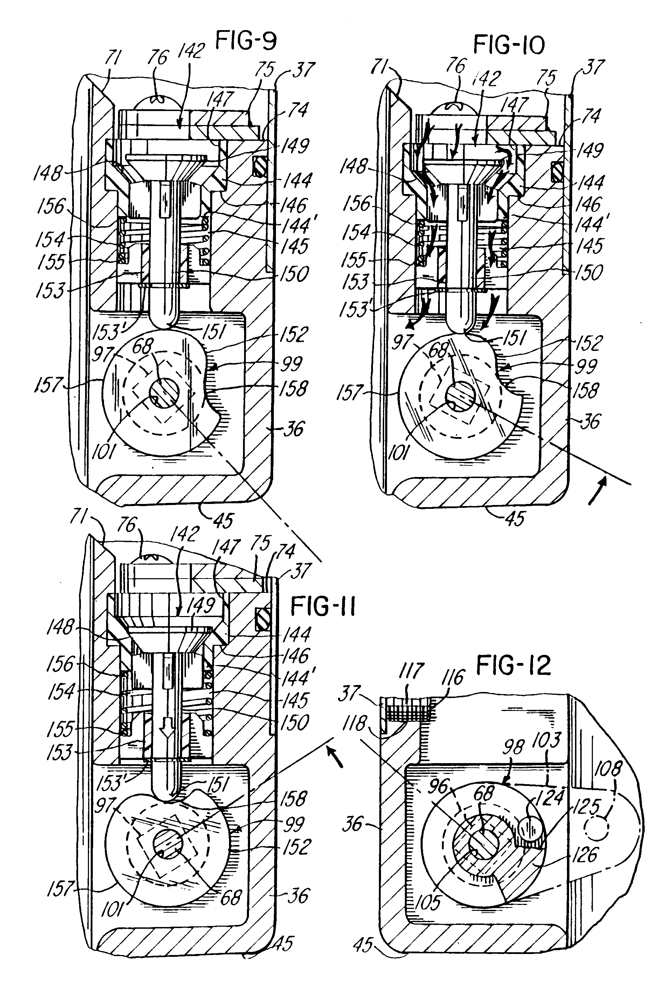

As previously stated, the shaft means 68 also pivotally mounts the link means 70 to the section 36 of the drop tube means 21, the link means 70 comprising a first link 103 having one end 104 provided with an opening 105 passing therethrough and receiving the shaft 68 therethrough. The end 104 of the link 103 is disposed intermediate the driver member 98 and the cam 99 as illustrated in FIG. 8 and rotates independently thereof. The other end 104′ of the link 103 is pivotally interconnected to an end 106 of another link 107 of the link means 70 by a pivot pin means 108 as illustrated, the other end 109 of the link 107 being pivotally mounted to the shaft 66 by having the shaft 66 pass through a suitable opening 110 in the end 109 of the link 107.

The link 107 actually comprises two separate members 111 and 112 fastened together by two fastening means 113 and 114 and is usually formed by the fastening member 113 first being utilized and then adjusting the position of the member 112 relative to the member 111 before utilizing the fastening member 114 so that the link 107 is, in effect, a single link that combines with the link 103 to form the link means 70.

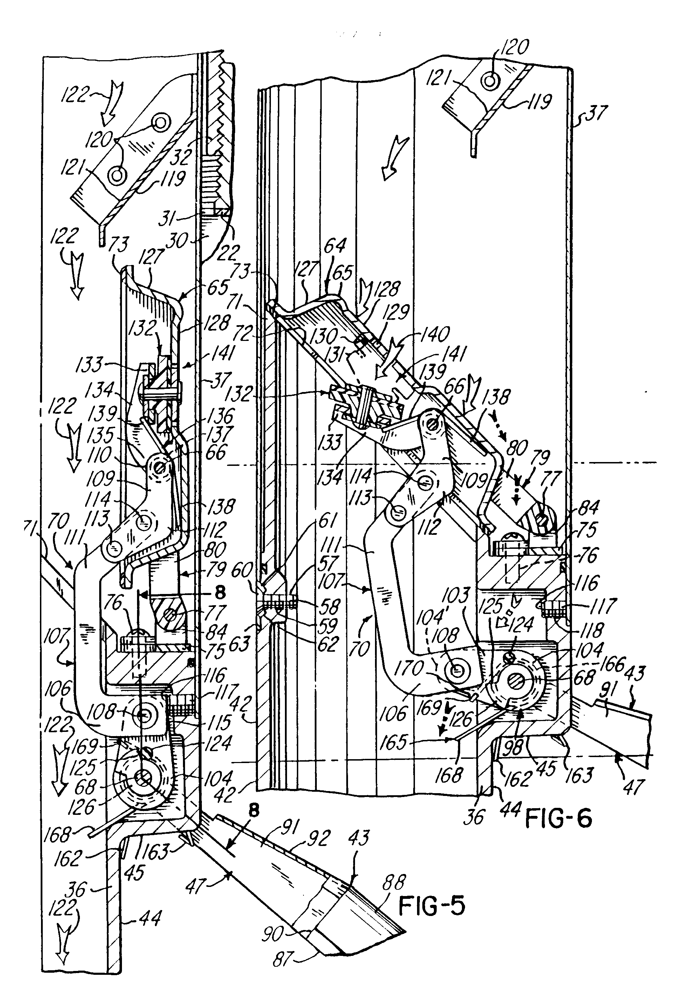

The end 106 of the link 107 has a substantially flat end surface 115 which is utilized for abutting against an end 116 of an adjustable stop member 117 threadedly carried in a threaded bore 118 of the portion or section 36 so as to limit the movement of the link means 70 when the main valve member 65 is disposed in a full open position as illustrated in FIG. 5. At this position, the pivot pin means 108 can be seen as being disposed over center in a clockwise direction relative to the shaft 68 so that any force acting downwardly on the main valve member 65 would tend to drive the main valve member 65 in a clockwise direction about the shaft 68 in FIG. 5 which movement is prevented by the end surface 115 of the link 107 abutting the adjustable stop member 117. Thus, the link means 70, when disposed in the position of FIG. 5, effectively locks the main valve member 65 in the full open position thereof.

With the main valve member 65 disposed in the full open position illustrated in FIG. 5, it can be seen that a deflector member 119 that is fastened to the upper section 37 by suitable fastening means 120 has the upper surface 121 thereof downwardly angled relative to the interior of the section 37 so as to deflect the fuel being dispensed downwardly through the drop tube mans 21 away from the main valve member 65 as represented by the arrows 122 in FIG. 5 so that the fuel 122 can pass through the opened valve seat 71 to the lower end 35 of the drop tube means 21 to fill the chamber 30. The deflector member 119 also protects the main valve member 65 from damage by a gauging stick which is used to check fluid level in the tank.

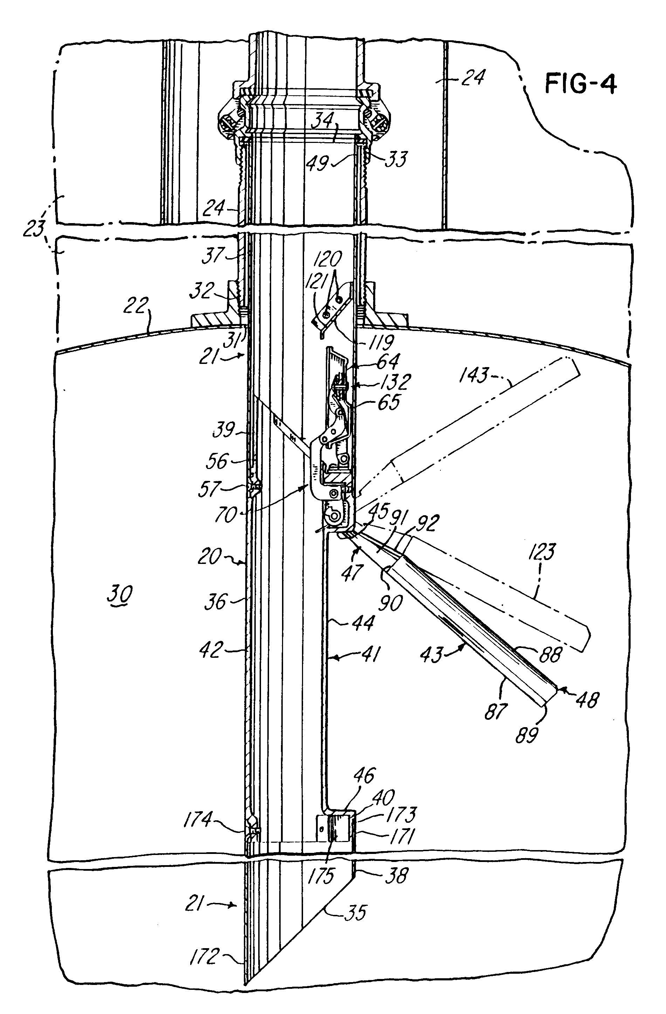

However, as the liquid level rises in the chamber 30 of the storage tank means 22, the same acts on the float means 43 to raise the same to the position illustrated by dash-dotted lines 123 in FIG. 4 and full lines in FIG. 5 to cause an outwardly directed rod-like drive pin means 124 of the driver member 98, which rotates in unison with the float means 43 on the shaft means 68, into engagement with a surface 125 on an extension 126 of the end 104 of the link 103 to cause the link 103 to rotate in a counterclockwise direction in FIG. 5. As the float means 43 continues to rotate in a counterclockwise direction on the shaft means 68 by the liquid level rising futher upwardly, such further counterclockwise movement of the link 103 caused by the driver member 98 being rotated on the shaft 68 by the rising float means 43 causes the link 107 to move outwardly to the left and carry the main valve member 65 therewith which pivots on the shafts 66 and 77 so as to have a forward part 127 thereof move out into the stream 122 of fuel flowing downwardly through the drop tube means 21 as represented by the arrows 122 in FIGS. 5 and 6 and, thus be carried by the downwardly flowing fuel further downwardly to seal closed against the valve seat 71. Such further closing movement of the main valve member 65 under the flow of fuel against an upper surface 128 thereof causes the link 103 to rotate on the shaft 68 faster than the float means 43 rotates the driver member 98 thereon so that the surface 125 of the link 103 moves away from the drive rod or portion 124 of the drive member 98 to effectively disconnect the float means 43 from the main valve means 64. Thus, any force vibrations caused by the main valve member 65 being closed against the valve seat 71 by a large head of liquid above the main valve member 65 will not be transmitted back through the linkage means 70 to the float 43 to cause vibration thereof and subsequent deterioration thereof as in the prior known arrangements.

The main valve member 65 has a relatively large opening 129 passing therethrough and defining on the underside 130 thereof an annular valve seat 131 which surrounds the opening 129 and is adapted to be opened and closed by a valve member 132 which is carried on an end 133 of a lever 134 which has its other end 135 pivotally mounted to the shaft means 66. The lever 134 is urged in a clockwise direction in FIG. 6 about the shaft means 66 by a spring means 136 that has a coiled body portion 137 disposed on the shaft means 66 and one opposed end 138 that bears against the underside 130 of the main valve member 65 and the other opposed end 139 which bears against the valve member 132, the spring 136 being coiled and retained in such a manner that the same always has a tendency to move and hold the valve member 132 in its closed condition against the valve seat 131 in the manner illustrated in FIGS. 5 and 7.

However, when the main valve member 65 is first forced to its closed condition against the valve seat 71 by the flow 122 of fuel downwardly through the drop tube means 21 in the manner previously set forth, the shock load or head of fuel that closes the main valve member 65 forces open the valve member 132 in opposition to the force of the spring means 136 in the manner illustrated by the arrow 140 in FIG. 6 so as to flow through the opening means 129 and thereby relieve the relatively large amount of the fuel that would be slamming against the main valve member 65 above the same as the main valve member 65 initially closes against the valve seat 71.

In this manner, the opening 129 can be larger than the flow reducing opening in the prior known arrangement so as to permit a large flow of fuel through the opening 129 rather than only a very small restricted flow as in the prior known arrangements whereby the main valve means 64 in combination with the valve means 141 that comprises the opening 129 and valve member 132 reduces the shock loading that would occur on the main valve member 65 when the same initially closes against the valve seat 71.

However, after the initial shock load of fuel 140 has passed through the opening 129 of the closed main valve member 65, the force of the spring 136 is sufficient to then close the valve member 132 against the valve seat 131 even though a head of fuel still is disposed in the drop tube means 21 above the main valve member 65 and an attempt is being made to continue to flow further liquid into the drop tube means 21 by a tank car or the like as will be apparent hereinafter.

Once the main valve means 64 has closed and the valve means 141 has subsequently closed as previously set forth, a first poppet valve means of this invention that is generally indicated by the reference numeral 142 in FIGS. 8-11 is utilized to provide a reduced flow of fuel through the drop tube means 21 into the chamber 30 of the storage tank means 22 at a controlled rate since the level 102 of liquid in the storage tank 22 has closed the main valve means 64 while there is still a portion of the chamber 30 yet to be filled with fuel as the liquid level 102 is approximately 8 inches from the top of the chamber 30 when the float means 43 causes the main valve means 64 to close as previously set forth.

However, when the first poppet valve means 142 is in the open position thereof, the same is adapted to only bleed fuel therethrough, at a much reduced rate, such as about two gallons per minute, into the storage tank 22 in a bypassing manner around the main valve seat 71 as will be apparent hereinafter so that it will take several hours between the time the main valve means 64 closes and the poppet valve means 142 would permit the tank means 22 to fill to a new level thereof where the float means 43 will cause closing of the poppet valve means 142 in a manner hereinafter set forth.

Thus, it can be seen that the operator, who is filling the storage tank means 22, such as from a hose from a gasoline storage truck wherein the hose is interconnected to the upper end means 28 of the inlet riser pipe means 24 in a conventional manner to flow therein under gravity from the truck, will know that the storage tank means 22 is getting close to being completely filled as the flow rate now going into the storage tank 22 after the main valve means 64 is closed has been reduced considerably even though the poppet valve means 142 is open and continuing to feed fuel into the storage tank 22 but at a greatly reduced rate, such as only approximately two gallons per minute, as previously set forth. Thus, the operator then can close off the flow of fuel to the riser pipe means 24 and the remaining fuel in the riser pipe means 24 will drain through the open poppet valve means 142 to further fill the storage tank means 22 long before the float means 43 would cause closing of the poppet valve means 142.

However, should the operator of the truck leave the gasoline filling operation for some reason, such as by becoming sick or even having a heart attack, the overfill valve construction 20 of this invention will automatically close the main valve means 64 by the float means 43 rising to the level 123 as illustrated in FIG. 4 and then permit a small continuous filling operation through the poppet valve means 142 until the float means 43 reaches approximately the position illustrated by the dash-dotted lines 143 in FIG. 4 which completely stops any further filling of fuel into the storage tank 22 so that fuel will not be able to pass out of the storage tank 22 through the separate conventional vent line thereof as would be the case if some means were not provided for preventing the continuous flow of fuel into the storage tank means 22 once the tank means has been completely filled.

The poppet valve means 142 compriss a housing means 144 that is disposed and secured in a stepped opening 145 passing through the upper flat surface 74 of the upper offset end 45 of the portion 36, such as being held in the opening 145 by the bracket means 75 that overlaps the housing 144 which is disposed against an internal shoulder means 146 as illustrated. The housing 144 has an opening 147 passing therethrough and defining a frusto-conical valve seat 148 that is adapted to be opened and closed by a frusto-conical valve member 149 that is movable in the housing 144 and has a stem 150 extending from the valve member 149 through the valve seat 148 and being provided with a rounded end 151 which is adapted to engage against a cam surface 152 on the cam member 99 that is rotatably mounted on the shaft means 68 as previously set forth. The stem 150 of the poppet valve member 149 has a spring retainer 153 thereon that is held from moving off of the stern 150 by a conventional C-shaped retaining ring 153' and is urged against the retaining means 153 by a compression spring 154 which has one end 155 bearing against the spring retainer 153 and the other end 156 thereof bearing against an end 144' of the housing means 144 whereby the spring means 154 always tends to move the valve member 149 in a downward direction in the drawings so as to close the valve member 149 against the valve seat 148. However, the cam surface 152 of the cam member 99 is so constructed and arranged that a high surface portion 157 thereof maintains the valve member 149 in an open condition relative to the valve seat 148 until a depressed area 158 of the cam surface 152 is aligned with the end 151 of the stem 150 in the manner illustrated in FIG. 11 to permit the compression spring 154 to close the valve member 149 against the valve seat 148 and thereby close the poppet valve means 142.

The closing of the poppet valve means 142 only takes place when the float means 43 has risen to the position 143 illustrated in FIG. 4 as the float means 43 causes rotation of the cam member 99 as the float means 43 moves in a counterclockwise direction in FIG. 4 and thereby rotates the cam member 99 in a counterclockwise direction in FIGS. 9-11 so that when the float means 43 is in the position 143 of FIG. 4, the low point 158 of the cam surface 152 is aligned with the valve stem 150 to permit the compression spring 154 to close the poppet valve member 149 against the valve seat 148 and maintain the same in such closed position as the float means 43 is now in the position 143 of FIG. 4 because the liquid level in the storage tank 22 has risen to such a position.

In this manner, all flow of fuel to the chamber 30 of the storage tank means 22 is completely terminated by the overfill valve construction 20 of this invention.

The float means 43 is normally urged to the normal position illustrated by full lines in FIG. 4 by a spring 160 that has a coiled body portion 161 disposed on the shaft means 68 and one opposed end 162 thereof bearing against the wall 44 of the depressed area 41 and the other opposed end 163 thereof bearing against one of the ears 93 of the float means 43.

In this manner, the float means 43 can be moved into the depressed area 41 to permit the overfill valve construction 20 to be inserted down through the riser pipe means 24 in the manner illustrated in FIG. 2 where the float means 43 is tending to be pivotally moved outwardly by the spring 160 so that the outer face 88 thereof bears against the inside surface 164 of the riser pipe means 24 as illustrated in FIG. 2 and still permit the drop tube means 21 of this invention to be inserted down through the riser pipe means 24 until the upper flange 50 of the section 37 abuts against the shoulder means 54 whereupon the end member 28 is adapted then to be threaded onto the upper end of the riser pipe means 24 to complete the same as previously set forth. At the time that the flange 50 of the upper section 37 aligns with the upper end 54 of the riser pipe means 24, the portion 36 of the drop tube means 21 is now within the storage chamber 30 and below the inlet opening 31 thereof so that the force of the spring 160 moves the float means 43 to its out position as illustrated by full lines in FIG. 4 wherein the float means 43 remains in such position until the liquid level reaches the same and begins to float the float means 43 upwardly as prevously set forth.

Thus, it can be seen that it is a relatively simple method of this invention to assemble the drop tube means 21 of this invention in the storage tank means 22 as the unique shape of the float means 43 permits the same to be contained in the depressed area 41 and, thus, within the outline of the drop tube means 21 as the drop tube means 21 is being inserted through the riser pipe means 24. Also, the streamlined shape of the ends 47 and 48 of the float means 43 prevents any hang up of the float means 43 during such assembling operation.

In order to normally hold the main valve member 65 in the full open position as illustrated in FIG. 5, another spring means 165 is provided and has a coiled body portion 166 disposed on a tubular extension 167 (see FIG. 8) of the end 104 of the link 103 while one opposed end 168 thereof bears against the casing 36 and the other opposed end 169 thereof bears against a side 170 of the line 103 so that the stored energy in the spring means 165 tends to rotate the line 103 in a clockwise direction on the shaft means 68 when viewing the shaft means 68 in FIG. 5 and 6. In this manner, the force of the spring 165 tends to maintain the end 115 of the line 107 against the stop 117 and thus in an over center locked position as previously set forth.

Therefore, it can be seen that the overfill valve construction 21 of this invention can be formed of the various parts of this invention and be assembled together by the method of this invention to provide a drop tube means 21 which is adapted to operate in a manner now to be described.

Once the drop tube means 21 has been installed in the riser pipe means 24 so that the portion 36 thereof is in the storage compartment 30 as previously set forth with the float means 43 being held outwardly by the spring means 160 in the full line position of FIG. 4, the main valve means 65 is being held in its full open position under the deflector means 119 by the spring means 165. Thus, when an operator desires to fill the storage tank 22 by removing the cover means 27 and attaching a dispensing hose from the gasoline truck to the upper end means 28 of the riser pipe means 24 in a conventional manner, fuel can be directed downwardly through the upper section 37 of the drop tube means 21 and through the open main valve means 64 to pass out of the end 35 of the lower section 38 to begin to fill the chamber 30 of the storage tank means 22 as previously set forth, the flow of fuel down through the drop tube means 21 being deflected away from the main valve member 65 by the deflector means 119 as previously set forth.

However, when the level 102 of fuel in the chamber 30 of the storage tank means 22 causes the float means 43 to begin to float and thereby move upwardly from the full line position illustrated in FIG. 4 to the phantom line position 123, such movement of the float means 43 causes both the drive means 98 and the cam means 99 to rotate in opening means 69. However, only the drive part 124 of the drive means 98 engages against the surface 125 of the link 103 to cause the line 103 to begin to rotate in a counterclockwise direction in FIGS. 5 and 6 and move the main valve member 65 outwardly into the stream 122 of fuel which catches against the forward end 127 of the main valve member 65 and rapidly moves the same downwardly against the valve seat 71 to close the valve seat 71. This initial shock load or head of fuel now being held above the closed main valve member 65 forces through the opening 129 of the main valve member 65 by moving the valve member 132 away from the underside 130 of the main valve member 65 in opposition to the force of the spring means 136 so as to momentarily relieve the force of the fuel in the drop tube means 21 that would be acting downwardly on the closed main valve member 65. Once this initial head of fuel passes through the opening means 129 to the chamber 30 of the storage tank means 22, the valve member 132 is urged by the spring means 136 back to its closed position as illustrated by phantom lines in FIG. 6 so that the only flow of fuel now into the storage chamber 30 of the storage tank means 22 is through the open poppet valve means 142 which is still being held in the open position by the high area 157 of the cam surface 152. However, should the flow of fuel continue to flow through the open valve means 142 for several hours after the main valve means 64 has been closed in the manner previously set forth, the level of fuel in the chamber 30 of the storage tank means 22 causes the float means 43 to move to the position illustrated by the phantom lines 143 in FIG. 4 and thereby rotate the cam member 99 so that the low portion 158 thereof is now aligned with the valve stem 150 so that the compression spring 154 can close the poppet valve member 149 against the poppet valve seat 148 and terminate any further flow of fuel into the storage tank means 22.

In this manner, a complete overfilling of the storage tank means 22 is prevented by the overfill valve construction 20 of this invention so that fuel cannot be continuously pumped into the chamber 30 thereof and pass out through the vent pipe thereof to spill onto the ground, etc.

Of course, once a filling operation has been terminated and as the level of the fuel in the storage tank 22 begins to fall because of the fuel being pumped out of the chamber thereof by the normal operation of the filling station or the like, the float means 43 begins to move downwardly and such downward movement of the float means 43 first causes the poppet valve member 149 to be moved to an open position through the cam 99 in opposition to the force of the compression spring 154 and then causes the main valve member 65 to be moved to its full open position as the drive part 124 of the drive means 98 has been moved sufficiently away from its tripping position so that the force of the spring 165 can return the link means 70 to the position of FIG. 5 once the head of fuel above the main valve means 65 has been relieved by the now open poppet valve means 142 and the level in the chamber 30 has fallen sufficiently to permit the float means 43 to move to the full line position illustrated in FIG. 4. Even though the fuel level now falls below the position that permits the float means 43 to be in the full line position illustrated in FIG. 4, the float means 43 will not follow the falling liquid level within the chamber 30 of the storage tank means 22 as the spring means 160 maintains the float means 43 in the full line position illustrated in FIG. 4 so that the valve construction 20 of this invention can again perform its function in preventing an overfill condition during subsequent filling operation in the manner previously described.

## Claims

1. An overfill valve construction for use in a storage tank means (22) having a chamber therein for storing liquid fuel and the like and having an inlet riser pipe means (24) extending therefrom, said construction comprising a drop tube means (21) for being inserted through said riser pipe means and having a portion (36) thereof disposed within said storage tank means, a main valve means (64) in said drop tube means and having a main valve seat (71) and a movable main valve member (65) for opening and closing said main valve seat so as to tend to close said drop tube means between the opposed ends thereof, and float means (43) operatively interconnected to said main valve member to cause closing of said main valve member when said float means is raised to a certain position relative to said portion by rising liquid in said chamber of said storage tank means, characterized in that said portion (36) has an external wall that defines a generally cylindrical tubular section that has a generally circular transverse cross-sectional configuration throughout the length thereof except for a depressed area (41) therein in which said float means (43) can be disposed so as to be maintained substantially within the outline of said configuration when said drop tube means has said portion inserted through said riser pipe means (24) to be received in said chamber (30) of said storage tank means (22).

2. An overfill valve construction as set forth in claim 1 characterized in that said external wall (42) of said portion at said depressed area (41) thereof has a generally flat length (44) disposed within said outline and has opposed facing shoulders (45,46) at the ends of said flat length that extend outwardly from said flat length to said outline; and said float means (43) comprises an elongated member (88) having opposed ends adapted to be respectively disposed adjacent said shoulders (45,46) when said float means is disposed in said depressed area of said section.

3. An overfill valve construction as set forth in claim 2 further characterized in that the flat length (44) is disposed on a chord of said circular cross section and the float member (88) is elongated and has a cross section in the form of a segment generated by a radius approximating the radius of said circular cross section and a thickness approximating the distance the flat length (44) is spaced inwardly from said vertical outline.

4. An overfill valve construction as set forth in claim 3 further characterized in that the float means (43) include means (68) pivotally mounting one end (90) of the float (88) on said portion (36) of the tube means about a horizontal axis above the upper shoulder (45), and said one end of the float is adjacent the upper shoulder (45) and the other end (89) of the float is adjacent the lower shoulder (46) when the float is in its insertion position.

5. An overfill valve construction as set forth in any preceding claim characterized in that said main valve member (65) has a pressure relief opening (129) and carries a relief valve member (132) for opening and closing said pressure relief opening.

6. An overfill valve construction as set forth in claim 5 characterized in that said relief valve member (132) is a flapper valve member preferably pivotally carried by said main valve member (65).

7. An overfill valve construction as set forth in claim 5 or 6 characterized in that said main valve member (65) has a pressure relief valve seat (131) on one side thereof, said relief valve member (132) being adapted to open and close said pressure relief valve seat; said one side of said main valve member (65) faces in the downstream direction of said drop tube means (21), and biasing means (136) are provided which tend to pivot said relief valve member (132) in the closing direction thereof to normally close said pressure relief valve seat.

8. An overfill valve construction as set forth in any of the preceding claims, characterized in that said drop tube means has a bleed poppet valve means (142) disposed therein comprising a bleed valve seat (148) that bypasses the main valve seat (71) and a movable bleed valve member (149) for opening and closing said bleed valve seat, said float means (43) being operatively interconnected to said bleed valve member to cause closing of the bleed valve member when said float means is raised to another certain position relative to said portion by rising liquid in said chamber of said storage tank means.

9. An overfill valve construction as set forth in claim 8, characterized in that said other certain position is a position of said liquid in said compartment of said storage tank means that is a higher liquid level than a liquid level that produces said certain position of said float means (43) that causes closing of the main valve means (64).

10. An overfill valve construction as set forth in claim 8 or 9 characterized in that said bleed valve member (149) is normally biased to a closed position thereof against said bleed valve seat, said float means (43) being operatively interconnected to said bleed valve member by cam means (99) to hold said bleed valve member in an open position relative to said bleed valve seat in opposition to said biasing means as long as said float means has not been raised to said other certain position thereof.

11. An overfill valve construction as set forth in claim 8, 9 or 10 characterized in that said float means (43) is operatively interconnected to said main and bleed valve members (65,149) by a shaft means (68) carried by said drop tube means, said shaft means having cam means (99) thereon, said float means (43) being interconnected to said cam means to rotate said cam means as said float means moves relative to said drop tube means; said shaft means (68) has driver means (124) thereon for causing said main valve member (65) to move towards its closing position with its said valve seat (71) when said driver means is rotated a certain amount, and said float means is interconnected to said driver means to rotate said driver means as said float means moves relative to said drop tube means.

12. An overfill valve construction as set forth in any of claims 1 to 10, wherein said main valve member (65) is pivotally mounted to said drop tube means by a first pivot shaft means (77) and said float means (43) is pivotally mounted to said drop tube means by a second pivot shaft means (68), characterized further by a link means (70) pivotally mounted to said main valve member (65) and second pivot shaft means for controlling the closing movement of said valve member (64) from a certain open position thereof.

13. An overfill valve construction as set forth in claim 12 characterized in that said link means (70) comprises a pair of rigid links (103,107) which are pivotally connected to each other by a pin means (108) and are respectively pivotally connected to said second pivot shaft means (68) and said valve member (65).

14. An overfill valve construction as set forth in claim 13 characterized in that biasing means (165) tends to pivot said main valve member (65) to a full open position thereof; and said links (103,107) are disposed in an overcentre position thereof when said valve member (65) is disposed in said full open position thereof so that said links in said overcentre position thereof tend to lock said valve member in said full open position thereof.

15. An overfill valve construction as set forth in claim 14 characterized in that said float means (43) is operatively interconnected to said main valve member (65) by a driver means (98) carried by said second pivot shaft means (68), said float means (43) being interconnected to said driver means to rotate the same in one direction as said float means is being raised to said certain position thereof, said driver means having means (124) for engaging said link means (103,107) to move the same through said overcentre position and thus move said valve member (65) out of said full open position thereof to a partially closed position thereof when said float means reaches said certain position thereof.

16. An overfill valve construction as set forth in any previous claim characterized in that said drop tube means (21) has deflector means (119) for preventing liquid being dispensed into said drop tube means from acting on said valve member when said valve member (65) is in said full open position thereof, said deflector means (119) permitting said liquid being dispensed into said drop tube means to close said valve member (65) against said valve seat (71) when said valve member has been moved to a partially closed position thereof.

## Patentansprüche

1. Ventil zum Verhindern einer Überfüllung in einer Speichertankeinrichtung (22) mit einer Kammer darin zum Speichern von flüssigem Brennstoff und ähnlichem und mit einer sich davon erstreckenden Einlaßsteigrohreinrichtung (24), wobei die Konstruktion aufweist eine Fallrohreinrichtung (21) zum Einfügen durch die Steigrohreinrichtung und wovon ein Abschnitt (36) innerhalb der Speichertankeinrichtung angeordnet ist, eine Hauptventileinrichtung (64) in der Fallrohreinrichtung mit einem Hauptventilsitz (71) und einem beweglichen Hauptventilelement (65) zum Öffnen und Schließen des Hauptventilsitzes, um dazu zu neigen, die Fallrohreinrichtung zwischen entgegengesetzten Enden davon zu schließen und eine mit dem Hauptventilelement im Betrieb verbundene Schwimmereinrichtung (43), um ein Schließen des Hauptventilelements zu verursachen, wenn die Schwimmereinrichtung auf eine bestimmte Position bezüglich des Abschnitts angehoben wird durch ansteigende Flüssigkeit der Kammer der Speichertankeinrichtung, dadurch gekennzeichnet, daß der Abschnitt (36) eine Außenwand hat, welche einen im allgemeinen zylindrischen röhrenförmigen Ausschnitt hat, der eine im allgemeinen kreisförmige transversale Querschnittskonfiguration durch dessen gesamte Länge hat mit Ausnahme eines eingedrückten Bereichs (41) darin, in welchem die Schwimmereinrichtung (43) angeordnet sein kann, um im wesentlichen innerhalb der Umrisses der Konfiguration gehalten zu werden, wenn der Abschnitt der Fallrohreinrichtung durch die Steigrohreinrichtung (24) eingefügt ist, um in der Kammer (30) der Speichertankeinrichtung (22) aufgenommen zu werden.

2. Ventil zum Verhindern einer Überfüllung nach Anspruch 1, dadurch gekennzeichnet, daß die Außenwand (42) des Abschnitts bei dessen eingedrücktem Bereich (41) eine innerhalb des Umrisses angeordnete im allgemeinen flache Länge (44) hat und gegenüberliegende, einander zugewandte Schultern (45, 46) an den Enden der flachen Länge hat, welche sich nach außen von der flachen Länge zu dem Umriß erstrecken; und daß die Schwimmereinrichtung (43) ein längliches Element (88) aufweist mit gegenüberliegenden Enden, die so angepaßt sind, um jeweils benachbart zu den Schultern (45, 46) angeordnet zu sein, wenn die Schwimmereinrichtung in dem eingedrückten Bereich des Ausschnitts angeordnet ist.

3. Ventil zum Verhindern einer Überfüllung nach Anspruch 2, weiterhin dadurch gekennzeichnet, daß die flache Länge (44) auf einer Sehne des kreisförmigen Querschnitts angeordnet ist und das Schwimmerelement (88) länglich ist und einen Querschnitt in Form eines Segments hat, welches erzeugt wird durch einen den Radius des kreisförmigen Querschnitts approximierenden Radius und eine Dicke, welche die Entfernung approximiert, um die die flache Länge (44) nach innen von dem vertikalen Umriß beabstandet ist.

4. Ventil zum Verhindern einer Überfüllung nach Anspruch 3, weiterhin dadurch gekennzeichnet, daß die Schwimmereinrichtung (43) eine Einrichtung (68) beinhaltet, durch welche ein Ende des Schwimmers (88) an den Abschnitt (36) der Rohreinrichtung um eine horizontale Achse oberhalb der oberen Schulter (45) drehbar montiert ist, und daß das eine Ende des Schwimmers zu der oberen Schulter (45) benachbart ist und das andere Ende (89) des Schwimmers zu der unteren Schulter (46) benachbart ist, wenn der Schwimmer in seiner Einfügungsposition ist.

5. Ventil zum Verhindern einer Überfüllung nach einem der vorhergehenden Ansprüche, dadurch gekennzeichnet, daß das Hauptventilelement (65) eine Druckablaßöffnung (129) hat und ein Druckablaßventilelement (132) trägt zum Öffnen und Schließen der Druckablaßöffnung.

6. Ventil zum Verhindern einer Überfüllung nach Anspruch 5, dadurch gekennzeichnet, daß das Ablaßventilelement (132) ein Klappenventilelement ist, welches vorzugsweise drehbar von den Hauptventilelement (65) getragen wird.

7. Ventil zum Verhindern einer Überfüllung nach Anspruch 5 oder 6, dadurch gekennzeichnet, daß das Hauptventilelement (65) einen Druckablaß-Ventilsitz (131) an dessen einer Seite hat, wobei das Ablaßventilelement (132) angepaßt ist um den Druckablaß-Ventilsitz zu öffnen und zu schließen ; daß eine Seite des Hauptventilelements (65) in die stromabwärtige Richtung der Fallrohreinrichtung (21) weist und wobei eine Vorspannungseinrichtung (136) bereitgestellt ist, welche dazu neigt, das Ablaßventilelement (132) in dessen Verschlußrichtung zu drehen, um den Druckablaß-Ventilsitz gewöhnlich zu schließen.

8. Ventil zum Verhindern einer Überfüllung nach einem der vorgehenden Ansprüche, dadurch gekennzeichnet, daß die Fallrohreinrichtung eine darin angeordnete Entlüftungsventileinrichtung (142), hat welche aufweist einen Entlüftungsventilsitz (148), der den Hauptventilsitz (71) umgeht, und ein bewegliches Entlüftungsventilelement (149) zum Öffnen und Schließen des Entlüftungsventilsitzes, wobei die Schwimmereinrichtung (43) im Betrieb mit dem Entlüftungsventilelement verbunden ist, um ein Schließen des Entlüftungsventilelements zu verursachen, wenn die Schwimmereinrichtung zu einer anderen bestimmten Position durch ansteigende Flüssigkeit in der Kammer der Speichertankeinrichtung des Abschnitts angehoben wird.

9. Ventil zum Verhindern einer Überfüllung nach Anspruch 8, dadurch gekennzeichnet, daß die andere bestimmte Position eine Position der Flüssigkeit in dem Abteil der Speichertankeinrichtung ist, welche ein höherer Flüssigkeitspegel ist als ein Flüssigkeitspegel, der die bestimmte Position der Schwimmereinrichtung (43) erzeugt, welche das Schließen der Hauptventileinrichtung (64) verursacht.

10. Ventil zum Verhindern einer Überfüllung an Anspruch 8 oder 9, dadurch gekennzeichnet, daß das Entlüftungsventilelement (149) gewöhnlich gegen eine geschlossene Position davon vorgespannt ist gegen den Entlüftungsventilsitz, wobei die Schwimmereinrichtung (43) im Betrieb mit dem Entlüftungsventilelement durch eine Nockeneinrichtung (99) verbunden ist, um das Entlüftungsventilelement in einer geöffneten Position bezüglich dem Entlüftungsventilsitz zu halten in Gegenüberstellung zu der Vorspannungseinrichtung so lange die Schwimmereinrichtung nicht zu deren anderer bestimmten Position angehoben worden ist.

11. Ventil zum Verhindern einer Überfüllung nach Anspruch 8, 9 oder 10, dadurch gekennzeichnet, daß die Schwimmereinrichtung (43) mit den Haupt- und Entlüftungsventilelementen (65, 149) im Betrieb durch eine Welleneinrichtung (68) verbunden ist, welche durch die Fallrohreinrichtung getragen wird, wobei die Welleneinrichtung eine an ihr ausgebildete Nockeneinrichtung (99) hat, wobei die Schwimmereinrichtung (43) mit der Nockeneinrichtung verbunden ist, um die Nockeneinrichtung zu rotieren, wenn die Schwimmereinrichtung sich relativ zu der Fallrohreinrichtung bewegt; daß die Welleneinrichtung (68) eine Antriebseinrichtung (124) an ihr hat, um zu verursachen, daß sich das Hauptventil (65) mit seinem Ventilsitz (71) zu seiner Verschlußposition hin bewegt, wenn die Antriebseinrichtung um einen bestimmten Betrag rotiert wird, und wobei die Schwimmereinrichtung mit der Antriebseinrichtung verbunden ist, um die Antriebseinrichtung zu rotieren, wenn sich die Schwimmereinrichtung relativ zu der Fallrohreinrichtung bewegt.

12. Ventil zum Verhindern einer Überfüllung nach Anspruch 1 - 10, wobei das Hauptventilelement (65) an der Fallrohreinrichtung durch eine erste Drehwelleneinrichtung (77) drehbar montiert ist und die Schwimmereinrichtung (43) an der Fallrohreinrichtung durch eine zweite Drehwelleneinrichtung (68) drehbar montiert ist, gekennzeichnet weiterhin durch eine Verbindungseinrichtung (70), welche drehbar an dem Hauptventilelement (65) montiert ist, und eine zweite Drehwelleneinrichtung zum Steuern der Schließbewegung des Ventilelements (64) von einer bestimmten geöffneten Position davon.

13. Ventil zum Verhindern einer Überfüllung nach Anspruch 12, dadurch gekennzeichnet, daß die Verbindungseinrichtung (70) ein Paar steife Verbindungen (103, 107) aufweist, welche drehbar miteinander verbunden sind durch eine Zapfeneinrichtung (108) und die mit der zweiten Drehwelleneinrichtung (68) bzw. mit dem Ventilelement (65) drehbar verbunden sind.

14. Ventil zum Verhindern einer Überfüllung nach Anspruch 13, dadurch gekennzeichnet, daß die Vorspannungseinrichtung (165) dazu neigt, das Hauptventilelement (65) zu einer vollständig geöffneten Position zu drehen; und wobei die Verbindungen (103, 107) in einer Überzentrumsposition davon angeordnet sind, wenn das Ventilelement (65) in seiner vollständig geöffneten Position angeordnet ist, so daß die Verbindungen in deren Überzentrumsposition dazu neigen, das Ventilelement in einer vollständig geöffneten Position zu verriegeln.

15. Ventil zum Verhindern einer Überfüllung nach Anspruch 14, dadurch gekennzeichnet, daß die Schwimmereinrichtung (43) mit dem Hauptventilelement (65) durch eine Antriebseinrichtung (98) im Betrieb verbunden ist, welche durch die zweite Drehwelleneinrichtung (68) getragen wird, wobei die Schwimmereinrichtung (43) mit der Antriebseinrichtung verbunden ist, um sie in einer Richtung zu rotieren, wenn die Schwimmereinrichtung zu derer bestimmten Position angehoben wird, wobei die Antriebseinrichtung eine Einrichtung (124) hat, womit sie mit den Verbindungseinrichtungen (103, 107) in Eingriff tritt, um sie durch die Überzentrumsposition durchzubewegen und somit das Ventilelement (65) aus dessen vollständig geöffneter Position zu einer teilweise geschlossenen Position davon herauszubewegen, wenn die Schwimmereinrichtung deren bestimmte Positionen erreicht.

16. Ventil zum Verhindern einer Überfüllung nach einen, der vorhergehenden Ansprüche, dadurch gekennzeichnet, daß die Fallrohreinrichtung (21) eine Ablenkungseinrichtung (119) hat zum Verhindern, daß in die Fallrohreinrichtung eingespeiste Flüssigkeit auf das Ventilelement einwirkt, wenn das Ventilelement (65) in seiner vollständig geöffneten Position ist, wobei die Ablenkungseinrichtung (119) es der in die Fallrohreinrichtung eingefüllten Flüssigkeit gestattet, das Ventilelement (65) gegen den Ventilsitz (71) zu schließen, wenn das Ventilelement zu einer teilweise geschlossenen Position bewegt worden ist.

## Revendications

1. Construction formant vanne de trop plein destinée à être utilisée dans des moyens (22) formant réservoir de stockage et comportant une chambre destinée à stocker du comburant liquide et analogue et comportant des moyens (24) formant conduite montant d'entrée s'étendant à partir de celle-ci, ladite construction comportant des moyens (21) formant pipette destinés à être insérés à travers lesdits moyens formant conduite montante et comportant une partie (36) agencée à l'intérieur desdits moyens formant réservoir de stockage, des moyens (64) formant vanne principale situés dans lesdits moyens formant pipette et comportant un siège (71) de vanne principale et un élément (65) de vanne principale mobile pour ouvrir et fermer ledit siège de vanne principale de manière à tendre à fermer lesdits moyens formant pipette entre les extrémités opposées de cette dernière, et des moyens (43) formant flotteur reliés de manière opérationnelle audit élément de vanne principale pour entraîner la fermeture dudit élément de vanne principale lorsque lesdits moyens formant flotteur sont élevés vers une certaine position par rapport à ladite partie, par élévation du niveau de liquide dans ladite chambre desdits moyens formant réservoir de stockage, caractérisée en ce que ladite partie (36) comporte une paroi extérieure qui définit un tronçon tubulaire de manière générale cylindrique qui a une configuration en coupe transversale de manière générale circulaire à travers toute sa longueur à l'exception d'une zone (41) creusée dans celle-ci et dans laquelle lesdits moyens (43) formant flotteur peuvent être agencés de manière à être retenus pratiquement à l'intérieur du contour de ladite configuration lorsque lesdits moyens formant pipette ont ladite partie insérée à travers lesdits moyens (24) formant conduite montante pour être reçue dans ladite chambre (30) desdits moyens (22) formant réservoir de stockage.

2. Construction formant vanne de trop plein selon la revendication 1, caractérisée en ce que ladite paroi extérieure (42) de ladite partie, au niveau de ladite zone creusée (41) de celle-ci, a une longueur (44) de manière générale plate agencée à l'intérieur dudit contour et a des épaulements dirigés de manière opposée (45,46) situés au niveau des extrémités de ladite longueur plate qui s'étendent vers l'extérieur à partir de ladite longueur plate vers ledit contour, et lesdits moyens (43) formant flotteur comportent un élément allongé (88) ayant des extrémités opposées adaptées pour être respectivement disposées adjacentes auxdits épaulement (45,46) lorsque lesdits moyens formant flatteur sont disposés dans ladite zone creusée dudit tronçon.

3. Construction formant vanne de trop plein selon la revendication 2, caractérisée en outre en se que la longueur plate (44) est disposée sur une corde dudit tronçon à coupe transversale circulaire et l'élément (88) formant flotteur est allongé et a une coupe transversale ayant la forme d'un segment engendré par un rayon proche du rayon dudit tronçon à section transversale circulaire et une épaisseur proche de la distance sur laquelle la longueur plate (44) est écartée vers l'intérieur à partir dudit contour vertical.

4. Construction formant vanne de trop plein selon la revendication 3, caractérisée en outre en ce que les moyens (43) formant flotteur comportent des moyens (68) de montage de manière pivotante d'une extrémité (90) du flotteur (88) sur ladite partie (36) des moyens formant conduite autour d'un axe horizontal situé au-dessus de l'épaulement supérieur (45), et ladite extrémité du flotteur est adjacente à l'épaulement supérieur (45) et l'autre extrémité (89) du flotteur est adjacente à l'épaulement inférieur (46) lorsque le flotteur est dans sa position insérée.

5. Construction formant vanne de trop plein selon l'une quelconque des revendications précédentes, caractérisée en ce que ledit élément (65) de vanne principale a une ouverture (129) de décharge de pression et supporte un élément (132) de vanne de décharge destiné à ouvrir et fermer ladite ouverture de décharge de pression.

6. Construction formant vanne de trop plein selon la revendication 5, caractérisée en ce que ledit élément (132) de vanne de décharge est un élément de vanne formant obturateur supporté de préférence de manière pivotante par ledit élément (65) de vanne principale.

7. Construction formant vanne de trop plein selon la revendication 5 ou 6, caractérisée en ce que ledit élément (65) de vanne principale comporte un siège (131) de vanne de décharge de pression situé sur un côté de celui-ci, ledit élément (132) de vanne de décharge étant adapté pour ouvrir et fermer ledit siège de vanne de décharge de pression, ledit premier côté dudit élément (65) de vanne principale est dirigé dans la direction aval desdits moyens (21) formant pipeite, et des moyens de rappel (136) sont prévus qui tendent à faire pivoter ledit élément (132) de vanne de décharge dans la direction de fermeture de celle-ci pour normalement fermer ledit siège de vanne de décharge de pression.

8. Construction formant vanne de trop plein selon l'une quelconque des revendications précédentes, caractérisée en ce que lesdits moyens formant pipette comportent des moyens (142) formant soupape de purge agencés dans celle-ci, comportant un siège (148) de soupape de purge qui met en dérivation le siège (71) de vanne principale et un élément (149) mobile de soupape de purge destiné à ouvrir et fermer ledit siège de soupape de purge, lesdits moyens (43) formant flotteur étant reliés de manière opérationnelle audit élément de soupape de purge pour entraîner la fermeture de l'élément de soupape de purge lorsque lesdits moyens formant flotteur sont élevés vers une autre certaine position par rapport à ladite partie, par élévation du liquide dans ladite chambre desdits moyens formant réservoir de stockage.

9. Construction formant vanne de trop plein selon la revendication 8, caractérisée en ce que ladite autre certaine position est une position dudit liquide dans ledit compartiment desdits moyens formant réservoir de stockage qui est un niveau de liquide plus élevé qu'un niveau de liquide qui produit ladite certaine position desdits moyens (43) formant flotteur qui entraîne la fermeture des moyens (64) formant vanne principale.

10. Construction formant vanne de trop plein selon la revendication 8 ou 9, caractérisée en ce que ledit élément (149) de soupape de purge est normalement rappelé vers sa position fermée contre ledit siège de soupape de purge, lesdits moyens (43) formant flotteur étant reliés de manière opérationnelle audit élément de soupape de purge par des moyens (99) formant came pour maintenir ledit élément de soupape de purge dans une position ouverte par rapport audit siège de soupape de purge à l'encontre desdits moyens de rappel aussi longtemps que lesdits moyens formant flotteur ne sont pas élevés vers ladite autre certaine position.

11. Construction formant vanne de trop plein selon la revendication 8, 9 ou 10, caractérisée en ce que lesdits moyens (43) formant flatteur sont reliés de manière opérationnelle auxdits éléments (65,149) de vanne principale et de soupape de purge par des moyens (68) formant arbre supporté par lesdits moyens formant pipette, lesdits moyens formant arbre comportant des moyens (99) formant came qui y sont montés, lesdits moyens (43) formant flotteur étant reliés auxdits moyens formant came pour mettre en rotation lesdits moyens formant came lorsque lesdits moyens formant flotteur se déplacent par rapport auxdits moyens formant pipette, lesdits moyens (68) formant arbre comportent des moyens (124) d'entraînement qui y sont situés pour entraîner ledit élément (65) de vanne principale à se déplacer vers sa position de fermeture de son siège (71) de vanne lorsque lesdits moyens d'entraînement sont mis en rotation sur une certaine amplitude, et lesdits moyens formant flotteur sont reliés auxdits moyens d'entraînement pour mettre en rotation lesdits moyens d'entraînement lorsque lesdits moyens formant flotteur se déplacent par rapport auxdits moyens formant conduite descendante.

12. Construction formant vanne de trop plein selon l'une quelconque des revendications 1 à 10, dans laquelle ledit élément (65) de vanne principale est monté de manière pivotante sur lesdits moyens formant conduite descendante par des premiers moyens (77) formant arbre de pivotement et lesdits moyens (43) formant flotteur sont montés de manière pivotante sur lesdits moyens formant conduite descendante par des seconds moyens (68) formant arbre de pivotement, caractérisée en outre en ce que des moyens (70) formant liaison sont montés de manière pivotante sur ledit élément (65) de vanne principale et les seconds moyens formant arbre de pivotement pour commander le mouvement de fermeture dudit élément (64) de vanne à partir d'une certaine position ouverte de celui-ci.

13. Construction formant vanne de trop plein selon la revendication 12, caractérisée en ce que lesdits moyens (70) formant liaison comportent une paire de liaisons rigides (103,107) qui sont reliées de manière pivotante l'une à l'autre par des moyens (108) formant axe et sont reliées respectivement de manière pivotante auxdits seconds moyens (68) formant arbre de pivotement et audit élément (65) de vanne.

14. Construction formant vanne de trop plein selon la revendication 13, caractérisée en ce que lesdits moyens de rappel (165) tendent à faire pivoter ledit élément (65) de vanne principale vers une position complètement ouverte de celui-ci, et lesdites liaisons (103,107) sont disposées dans une position à passage brusque de celles-ci lorsque ledit élément (65) de vanne est disposé dans sa dite position complètement ouverte de telle sorte que lesdites liaisons dans leur dite position à passage brusque tendent à verrouiller ledit élément de vanne dans sa position complètement ouverte.

15. Construction formant vanne de trop plein selon la revendication 14, caractérisée en ce que lesdits moyens (43) formant flotteur sont reliés de manière opérationnelle audit élément (65) de vanne principale par des moyens d'entraînement (98) supportés par lesdits seconds moyens (68) formant arbre de pivotement, lesdits moyens (43) formant flotteur étant reliés auxdits moyens d'entraînement pour faire tourner ces derniers dans une direction lorsque lesdits moyens formant flotteur sont élevés vers ladite certaine position de celui-ci, lesdits moyens d'entraînement comportant des moyens (124) destinés à venir en prise avec lesdits moyens (103,107) formant liaison pour déplacer ceux-ci à travers la même position à passager brusque et donc déplacer ledit élément (65) de vanne en-dehors de sa dite position complètement ouverte vers une position partiellement fermée de celui-ci lorsque lesdits moyens formant flotteur atteignent ladite certaine position de celui-ci.

16. Construction formant vanne de trop plein selon l'une quelconque des revendications précédentes, caractérisée en ce que lesdits moyens (21) formant ladite pipette comportent des moyens (119) formant déflecteur pour empêcher le liquide distribué dans lesdits moyens formant pipette d'agir sur ledit élément de vanne lorsque ledit élément (65) de vanne est dans sa position complètement ouverte, lesdits moyens (119) formant déflecteur permettant audit liquide d'être distribué dans lesdits moyens formant pipette pour fermer ledit élément (65) de vanne contre ledit siège (71) de vanne lorsque ledit élément de vanne a été déplacé vers une position partiellement fermée de celui-ci.
